# EUROPEAN PATENT SPECIFICATION

(11) **EP 2 231 742 B1**
(45) Date of publication and mention of the grant of the patent: **07.12.2011**
(21) Application number: 09703071.2
(22) Date of filing: 13.01.2009
(51) Int. Cl.: C08G 18/82

(54) **THERMALLY INSULATING ISOCYANATE-BASED FOAMS**
WÄRMEISOLIERENDE SCHAUMSTOFFE AUF ISOCYANATBASIS
MOUSSES À BASE D'ISOCYANATE THERMO-ISOLANTES

(30) Priority: 17.01.2008 US 21682
(43) Date of publication of application: 29.09.2010
(73) Proprietor: Dow Global Technologies LLC, Midland, MI 48674 (US)
(72) Inventor: MORLEY, Timothy, A., CH-8810 Horgen (CH); CASATI, Francois, M., CH-8808 Pfaeffikon (CH); BIRCH, Adrian, J., 8645 Kempraten-Jona (CH); KRAMER, Hans, CH-8805 Zurich (CH)
(74) Representative: Hayes, Adrian Chetwynd
(86) International application number: PCT/US2009/030794
(87) International publication number: WO 2009/091705

(56) References cited:
- JP-A- 8 225 797
- US-A- 6 107 359

## Description

This invention pertains to a process for manufacturing rigid isocyanate-based foams, and to rigid foams made in accordance with said process.

Rigid isocyanate-based foams have been used widely for several decades as insulation foam for appliances and other applications, as well as a variety of other uses. These foams are prepared in a reaction of a polyisocyanate and one or more polyol, polyamine or aminoalcohol compounds. The polyol, polyamine or aminoalcohol compounds can be characterized as having equivalent weights per isocyanate-reactive group in the range of up to about 300 and an average of more than three hydroxyl and/or amino groups per molecule. The reaction is conducted in the presence of a blowing agent which generates a gas as the reaction proceeds. The gas expands the reacting mixture and imparts a cellular structure.

Originally, the blowing agent of choice was a "hard" chlorofluorocarbon (CFC) such as trichlorofluoromethane or dichlorodifluoromethane. These CFCs processed very easily and produced foam having very good thermal insulation properties. However, the CFC blowing agents have been phased out because of environmental concerns.

CFCs have been replaced with other blowing agents such as hydrofluorocarbons, low-boiling hydrocarbons, hydrochlorofluorocarbons, ether compounds and water (which reacts with isocyanates to generate carbon dioxide). For the most part, these alternative blowing agents are less effective thermal insulators than their CFC predecessors. The ability of a foam to provide thermal insulation is often expressed in terms of "k-factor", which is a measure of the amount of heat that is transferred through the foam per unit area per unit time, taking into account the thickness of the foam and the applied temperature difference across the foam thickness. Foams produced using alternative blowing agents tend to have higher k-factors than those produced using "hard" CFC blowing agents. This has forced rigid foam producers to modify their foam formulations in other ways to compensate for the loss of thermal insulation values that result from the changes in blowing agent. Many of these modifications focus on reducing cell size in the foam. Smaller-sized cells tend to provide better thermal insulation properties.

It has been found that modifications to a rigid foam formulation which improve k-factor often tend to affect the processing characteristics of the formulation in an undesirable way. The processing characteristics of the formulation are important, especially in pour-in-place applications such as appliance foam. Refrigerator and freezer cabinets, for example, are usually insulated by partially assembling an exterior shell and interior liner, and holding them in position such that a cavity is formed between them. This is often done using a jig or other apparatus. The foam formulation is introduced into the cavity, where it expands to fill the cavity. The foam provides thermal insulation and imparts structural strength to the assembly. The way the foam formulation cures is important in at least two respects. First, the foam formulation must cure quickly to form a dimensionally stable foam, so that the finished cabinet can be removed from the jig. This characteristic is generally referred to as "demold" time, and directly affects the rate at which cabinets can be produced.

In addition, the curing characteristics of the system affect a property known as "flow index", or simply "flow". A foam formulation will expand to a certain density (known as the 'free rise density') if permitted to expand against minimal constraints. When the formulation must fill a refrigerator or freezer cabinet, its expansion is somewhat constrained in several ways. The foam must expand mainly in a vertical (rather than horizontal) direction within a narrow cavity. As a result, the formulation must expand against a significant amount of its own weight. The foam formulation also must flow around corners and into all portions of the wall cavities. In addition, the cavity often has limited or no venting, and so the atmosphere in the cavity can exert additional pressure on the expanding foam. Because of these constraints, a greater amount of the foam formulation is needed to fill the cavity than would be predicted from the free rise density alone. The amount of foam formulation needed to minimally fill the cavity can be expressed as a minimum fill density (the weight of the formulation divided by the cavity volume). The ratio of the minimum fill density to the free rise density is the flow index. The flow index is ideally 1.0, but is on the order of 1.2 to 1.8 in commercially practical formulations. Lower flow index is preferred, all other things being equal, because raw material costs are lower when a smaller weight of foam is needed.

Modifications to foam formulations that favor low k-factor tend to have an adverse effect on demold time, flow index or both. Therefore, although formulations have been developed which closely match conventional CFC-based formulations in k-factor, the overall cost of using these formulations is often higher due to lower productivity (because of greater demold times), higher raw material costs (because of higher flow index) or both.

What is desired is a rigid foam formulation that provides a low k-factor foam with a low flow index and a short demold time.

For many applications, it is also desirable that the polyol has a reasonably low viscosity. Amine-initiated polyols for rigid foam applications often have very high viscosities, which make them difficult to handle and to process.

This invention involves an adduct of 1,2-phenylene diamine and propylene oxide, ethylene oxide, or a mixture of propylene oxide and ethylene oxide, the adduct having an average of from 2.8 to 4.0 hydroxyl groups per molecule, from 0.0 to 1.0 secondary amino groups per molecule, from 0 to 0.2 primary amino groups per molecule and an equivalent weight per active hydrogen atom of from about 60 to 250.

The invention is a process for preparing a rigid isocyanate-based foam, comprising
a) forming a reactive mixture containing at least
   1) the 1,2-phenylene diamine adduct of the invention, or mixture thereof with at least one other polyol, provided that such a polyol mixture contains at least 5% by weight of the 1,2-phenylene diamine adduct;
   2) at least one hydrocarbon, hydrofluorocarbon, hydrochlorofluorocarbon, fluorocarbon, dialkyl ether or fluorine-substituted dialkyl ether physical blowing agent; and
   3) at least one polyisocyanate; and
b) subjecting the reactive mixture to conditions such that the reactive mixture expands and cures to form a rigid foam.

In another aspect, the invention is a rigid foam made in accordance with the foregoing process.

It has been found that rigid foam formulations that include the 1,2-phenylene diamine adduct of the invention often exhibit desirable curing characteristics (as indicated by flow index of below 1.8) and short demold times, and cure to form a foam having excellent thermal insulation properties (i.e., low k-factor). These advantages are seen particularly when the 1,2-phenylene diamine adduct of the invention is used in admixture with one or more other polyols. In addition, the 1,2-phenylene diamine adduct of the invention has a surprisingly low viscosity, compared with many other amine-initiated polyols of similar molecular weights. The low viscosity greatly simplifies handling and processing the adduct and formulations containing the adduct. The polyol used in the invention provides for a lower k-factor, shorter demold times and lower polyol viscosity, even compared to closely related amine-initiated polyols, such as 1,3-phenylene diamine.

The 1,2-phenylene diamine adduct is a polyether that is prepared in the reaction of 1,2-phenylene diamine with propylene oxide, ethylene oxide, or a mixture of propylene oxide and ethylene oxide. Mixtures of ethylene oxide and propylene oxide may contain the oxides in any proportion. For example, a mixture of ethylene oxide and propylene oxide may contain at least 10 mole percent propylene oxide, at least 30 mole percent propylene oxide, or at least 45 mole percent propylene oxide, up to 99.5 mole percent propylene oxide.

The 1,2-phenylene diamine may be a highly purified material, but commercially available grades that have up to 10% by weight of other amine compounds can be used. The other amine compounds that are present in commercial grades may include 1,3-and/or 1,4-phenylene diamine, as well as other amine compounds. The 1,2-phenylene diamine preferably contains no more than about 5 weight percent of other amine compounds.

The alkoxylation reaction is conveniently performed by forming a mixture of the alkylene oxide(s) and the 1,2-phenylene diamine, and subjecting the mixture to conditions of elevated temperature and superatmospheric pressure. Polymerization temperatures may be, for example, from 110 to 170°C, and pressures may be, for example, from 2 to 10 bar (200 to 1000 kPa). A catalyst may be used, particularly if more than one mole of alkylene oxide(s) is to be added per equivalent of amine hydrogens on the initiator compound. Suitable alkoxylation catalysts include strong bases such as alkali metal hydroxides (sodium hydroxide, potassium hydroxide, cesium hydroxide, for example), certain tertiary amine compounds such as dimethylethylamine, and the so-called double metal cyanide catalysts (of which zinc hexacyanocobaltate complexes are most notable). The reaction can be performed in two or more stages, in which no catalyst is used in the first stage, and from 1 to 3 moles of alkylene oxide are added per mole of 1,2-phenylene diamine, followed by one or more subsequent stages in which additional alkylene oxide is added in the presence of a catalyst as described. After the reaction is completed, the catalyst may be deactivated and/or removed. Alkali metal hydroxide catalysts may be removed, left in the product, or neutralized with an acid and the residues left in the product. Residues of double metal cyanide catalysts may be left in the product, but can be removed instead if desired.

The 1,2-phenylene diamine adduct may contain up to 4.0 hydroxyl groups per molecule, However, it has been found that a portion of the amino hydrogens on the 1,2-phenylene diamine often do not become alkoxylated under typical alkoxylation conditions, which leads to the formation of an adduct having, on average, hydroxyl groups, some secondary amine groups and perhaps a small quantity of primary amino groups. Thus, the adduct may has an average of from 2.8 to 4.0 hydroxyl groups per molecule, from 0 to 1.2 secondary amine groups per molecule and from 0 to 0.2 primary amino groups per molecule. More typically, the adduct has an average of from 2.8 to 3.8 hydroxyl groups per molecule, from 0.2 to 1.2 secondary amino groups per molecule and from 0 to 0.2 primary amino groups per molecule. A preferred adduct contains from 3.1 to 3.6 hydroxyl groups per molecule, from 0.4 to 0.8 secondary amino groups per molecule and from 0 to 0.1 primary amino groups per molecule. Even more preferably, the adduct contains from 3.25 to 3.6 hydroxyl groups per molecule, from 0.4 to 0.75 secondary amino groups per molecule and from 0 to 0.05 primary amino groups per molecule.

The ratios of alkylene oxide and 1,2-phenylene diamine are selected such that the resulting adduct has an equivalent weight per active hydrogen atom of from about 60 to 250. For purposes of this invention, an active hydrogen atom is one bonded to a hydroxyl oxygen or the nitrogen atom of a secondary amino group or primary amino group. A preferred adduct has an equivalent weight of from 80 to 175 and an even more preferred adduct has an equivalent weight of from 90 to 175. An especially preferred is an adduct of a mole of 1,2-phenylene diamine and from 4.8 to 10 moles of propylene oxide, or propylene oxide/ethylene oxide mixture.

The 1,2-phenylene diamine adduct typically has a viscosity of less than 10,000 cps at 50°C. Preferably, its viscosity is less than 7,500 cps at 50°C and more preferably less than 6,000 cps at 50°C.

The 1,2-phenylene diamine adduct is useful in preparing rigid polyurethane foam. The rigid polyurethane foam is prepared from a polyurethane-forming composition that contains at least (1) the 1,2-phenylene diamine adduct, optionally in combination with one or more other polyols, (2) at least one organic polyisocyanate, and (3) at least one blowing agent as described more fully below.

The 1,2-phenylene diamine adduct suitably constitutes at least 5 weight percent of all polyols present in the polyurethane-forming composition. Below this level, the benefits of using the polyol are slight. The 1,2-phenylene diamine adduct may be the sole polyol in the polyurethane-forming composition. However, it is anticipated that it will be used in most cases in a mixture containing at least one other polyol, and that the 1,2-phenylene diamine adduct will constitute from about 5 to about 75% by weight of the polyol mixture. For example, the 1,2-phenylene diamine adduct may constitute from 10 to about 60% by weight of the polyol mixture, or from about 10 to about 50% by weight of the polyol mixture.

When a mixture of polyols is used, the polyol mixture preferably has an average of 3.5 to about 7 hydroxyl and/or primary or secondary amino groups per molecule and an average weight per hydroxyl and/or primary or secondary amino group of about 90 to about 175. Any individual polyol within the mixture may have a functionality and/or equivalent weight outside of those ranges, if the mixture as a whole meets these parameters. Any water that may be present is not considered in determining the functionality or equivalent weight of a polyol mixture.

A more preferred average functionality for a polyol mixture is from about 3.8 to about 6 hydroxyl and/or primary or secondary amino groups per molecule. An even more preferred average functionality for a polyol mixture is from about 3.8 to about 5 hydroxyl and/or primary or secondary amino groups per molecule. A more preferred average equivalent weight for a polyol mixture is from about 110 to about 130 atomic mass units per hydroxyl, primary amino and secondary amino group.

Suitable polyols that can be used in conjunction with the 1,2-phenylene diamine adduct include polyether polyols, which are conveniently made by polymerizing an alkylene oxide onto an initiator compound (or mixture of initiator compounds) that has multiple active hydrogen atoms. The initiator compound(s) may include alkylene glycols (e.g., ethylene glycol, propylene glycol, 1,4-butane diol, 1,6-hexanediol), glycol ethers (such as diethylene glycol, triethylene glycol, dipropylene glycol, tripropylene glycol), glycerine, trimethylolpropane, pentaerythritol, sorbitol, sucrose, glucose, fructose or other sugars. A portion of the initiator compound may be one containing primary and/or secondary amino groups, such as ethylene diamine, hexamethylene diamine, diethanolamine, monoethanolamine, N-methyldiethanolamine, piperazine, aminoethylpiperazine, diisopropanolamine, monoisopropanolamine, methanolamine, dimethanolamine, toluene diamine (all isomers). Amine-initiated polyols of these types tend to be somewhat autocatalytic. The alkylene oxide used to make the additional polyol(s) is as described before with respect to the 1,2-phenylene diamine adduct. The alkylene oxide of choice is propylene oxide, or a mixture of propylene oxide and ethylene oxide.

Polyester polyols (other than renewable resource polyols as described below) may also be used as an additional polyol. Suitable polyester polyols may contain from 2 to 4 hydroxyl groups per molecule and a hydroxyl equivalent weight of from 75 to 560. The polyester polyols include reaction products of polyols, preferably diols, with polycarboxylic acids or their anhydrides, preferably dicarboxylic acids or dicarboxylic acid anhydrides. The polycarboxylic acids or anhydrides may be aliphatic, cycloaliphatic, aromatic and/or heterocyclic and may be substituted, such as with halogen atoms. The polycarboxylic acids may be unsaturated. Examples of these polycarboxylic acids include succinic acid, adipic acid, terephthalic acid, isophthalic acid, trimellitic anhydride, phthalic anhydride, maleic acid, maleic acid anhydride and fumaric acid. The polyols used in making the polyester polyols include ethylene glycol, 1,2- and 1,3-propylene glycol, 1,4- and 2,3-butane diol, 1,6-hexane diol, 1,8-octane diol, neopentyl glycol, cyclohexane dimethanol, 2-methyl-1,3-propane diol, glycerine, trimethylol propane, 1,2,6-hexane triol, 1,2,4-butane triol, trimethylol ethane, pentaerythritol, quinitol, mannitol, sorbitol, methyl glycoside, diethylene glycol, triethylene glycol, tetraethylene glycol, dipropylene glycol, dibutylene glycol.

In some embodiments the polyol mixture contains at least one renewable-resource polyol having from 2 to 6 hydroxyl groups per molecule and a hydroxyl equivalent weight of from 75 to 1000. The renewable-resource polyol in those embodiments constitutes at least 1% by weight of the polyol mixture, and preferably constitutes from 1 to 15% weight percent thereof.

A "renewable-resource polyol", for purposes of this invention, is a polyol that is, or is produced from, a renewable biological resource, such as an animal fat, a vegetable fat, a lignocellulosic material or a carbohydrate such as starch. At least 50% of the mass of the renewable-resource polyol should come from the renewable biological resource. Various types of renewable-resource polyols are useful, including those described in Ionescu, Chemistry and Technology of Polyols for Polyurethanes, Rapra Publishers 2005. These include:
1. Castor oil.
2. A hydroxymethyl group-containing polyol as described in WO 2004/096882 and WO 2004/096883. Such polyols are prepared by reacting a hydroxymethyl group-containing fatty acid having from 12-26 carbon atoms, or an ester of such a hydroxymethyl group containing fatty acid, with a polyol or polyamine initiator compound having an average of at least 2 hydroxyl, primary amine and/or secondary amine groups, such that the hydroxymethyl-containing polyester polyol contains an average of at least 1.3 repeating units derived from the hydroxymethyl-group-containing fatty acid or ester per total number of hydroxyl, primary amine and secondary amine groups on the initiator compound, and the hydroxymethyl-containing polyester polyol has an equivalent weight of at least 400 up to 15,000. Preferred such polyols have the following average structure: 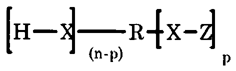 wherein R is the residue of an initiator compound having n hydroxyl and/or primary or secondary amine groups, where n is at least two; each X is independently -O-, -NH- or -NR'- in which R' is an inertly substituted alkyl, aryl, cycloalkyl, or aralkyl group, p is a number from 1 to n representing the average number of [X-Z] groups per hydroxymethyl-containing polyester polyol molecule, Z is a linear or branched chain containing one or more A groups, provided that the average number of A groups per molecule is ≥ 1.3 times n, and each A is independently selected from the group consisting of A1, A2, A3, A4 and A5, provided that at least some A groups are A1, A2 or A3, wherein A1 is: 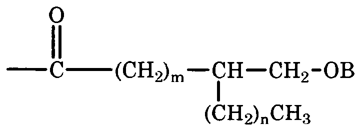 wherein B is H or a covalent bond to a carbonyl carbon atom of another A group; m is number greater than 3, n is greater than or equal to zero and m + n is from 11 to 19; A2 is: 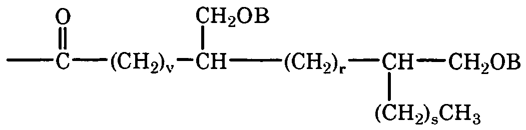 wherein B is as before, v is a number greater than 3, r and s are each numbers greater than or equal to zero with v + r + s being from 10 to 18, A3 is: 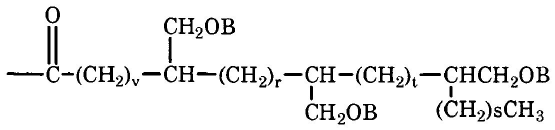 wherein B, v, each r and s are as defined before, t is a number greater than or equal to zero, and the sum of v, r, s and t is from 10 to 18; A4 is 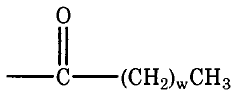 where w is from 10-24, and A5 is 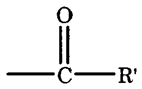 where R' is a linear or branched alkyl group that is substituted with at least one cyclic ether group and optionally one or more hydroxyl groups or other ether groups.
3. An amide group-containing polyol as described in WO 2007/019063. Among these are amide compounds having hydroxymethyl groups, which are conveniently described as an amide of (1) a primary or secondary amine compound that contains at least one hydroxyl group with (2) a fatty acid that contains at least one hydroxymethyl group. This type of amide has at least one hydroxyl-substituted organic group bonded to the amide nitrogen. In addition, a C₇₋₂₃ hydrocarbon group is bonded to the carbonyl carbon of the amide group. The C₇₋₂₃ hydrocarbon group is itself substituted with at least one hydroxymethyl group. Other amide group-containing polyols are conveniently described as an amide of a fatty acid (or ester) and a hydroxyl-containing primary or secondary amine, in which the fatty acid group has been modified to introduce one or more (N-hydroxyalkyl) aminoalkyl groups.
4. A hydroxyl ester-substituted fatty acid ester as described in WO 2007/019051. These materials contain at least two different types of ester groups. One type of ester group corresponds to the reaction product of the carboxylic acid group of a fatty acid with a compound having two or more hydroxyl groups. The second type of ester group is pendant from the fatty acid chain, being bonded to the fatty acid chain through the - O- atom of the ester group. The pendant ester group is conveniently formed by epoxidizing the fatty acid (at the site of carbon-carbon unsaturation in the fatty acid chain), followed by reaction with a hydroxy acid or hydroxy acid precursor. The pendant ester group includes at least one free hydroxyl group. These materials can be represented by the structure 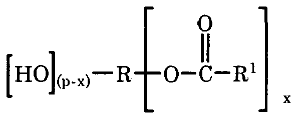 wherein R represents the residue, after removal of hydroxyl groups, of a compound having p hydroxyl groups, R¹ represents the hydrocarbon portion of a fatty acid, and x is a number from 1 to p. p is 2 or more, as discussed before. Each -R-O-C(O)- linkage represents an ester group of the first type discussed above. At least a portion of the R¹ chains are substituted with at least one hydroxyl-containing ester group, which can be represented as 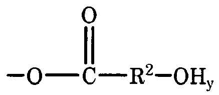 wherein R² is a hydrocarbyl group that may be inertly substituted, and y is 1 or more, preferably 1 or 2. The bond shown at the left of the structure attaches to a carbon atom of the fatty acid chain. Inert substituents in this context are those which do not interfere with the formation of the material or its use in making a polyurethane.
5. A "blown" soybean oil as described in US Published Patent Applications 2002/0121328, 2002/0119321 and 2002/0090488.
6. An oligomerized vegetable oil or animal fat as described in WO 06/116456. The oil or fat is oligomerized by epoxidizing some or all of the carbon-carbon double bonds in the starting material, and then conducting a ring-opening reaction under conditions which promote oligomerization. Some residual epoxide groups often remain in these materials. A material of this type having a hydroxyl functionality of about 4.4 and a molecular weight of about 1100 is available from Cargill Inc. under the trade name BiOH.
7. Hydroxyl-containing cellulose-lignin materials.
8. Hydroxyl-containing modified starches.

In other embodiments, the polyol mixture contains from 1 to 15% by weight, based on the weight of the polyol mixture, of at least one aromatic amine-initiated polyol (other than the 1,2-phenylene diamine adduct) having from 2 to 4 hydroxyl groups per molecule and a hydroxyl equivalent weight of from 75 to 560. The aromatic amine may be, for example, any isomer of toluene diamine (such as o-toluene diamine), any isomer of phenylene diamine, 2,2'-, 2,4'- and/or 2,6'-diaminodiphenylmethane, diethyltoluenediamine.

In another embodiment, the 1,2-phenylene diamine adduct is used as a mixture with at least one other polyether polyol that has an average functionality of from 4.5 to 7 hydroxyl groups per molecule and a hydroxyl equivalent weight of 100 to 175. The other polyether polyol may be, for example, a sorbitol- or sucrose/glycerine-initiated polyether. The 1,2-phenylene diamine adduct of the invention may constitute from 10 to 70% of the weight of the mixture in this case. Examples of suitable sorbitol- or sucrose/glycerine-initiated polyethers that can be used include Voranol® 360, Voranol® RN411, Voranol® RN490, Voranol® 370, Voranol® 446, Voranol® 520, Voranol® 550 and Voranol® 482 polyols, all available from The Dow Chemical Company.

In another embodiment, the 1,2-phenylene diamine adduct is present in a polyol mixture that also contains at least one other polyether polyol that has a functionality of from 4.5 to 7 hydroxyl groups per molecule and a hydroxyl equivalent weight of 100 to 175, and which is not amine-initiated, and at least one other amine-initiated polyol having a functionality of from 2.0 to 4.0 (preferably 3.0 to 4.0) and a hydroxyl equivalent weight of from 100 to 225. The other amine-initiated polyol may be initiated with, for example, ammonia, ethylene diamine, hexamethylenediamine, diethanolamine, monoethanolamine, N-methyldiethanolamine, piperazine, aminoethylpiperazine, diisopropanolamine, monoisopropanolamine, methanolamine, dimethanolamine, toluene diamine (all isomers). Ethylene diamine- and toluene diamine-initiated polyols are preferred in this case. The polyol mixture may contain from 5 to 50% by weight of the 1,2-phenylene diamine adduct of the invention; from 20 to 70% by weight of the non-amine-initiated polyol and from 2 to 20% by weight of the other amine-initiated polyol. The polyol mixture may contain up to 15% by weight of still another polyol, which is not amine-initiated and which has a hydroxyl functionality of 2.0 to 3.0 and a hydroxyl equivalent weight of from 90 to 500, preferably from 200 to 500. Specific examples of polyol mixtures as just described include a mixture of from 5 to 50% by weight of the 1,2-phenylene diamine, from 20 to 70% of a sorbitol or sucrose/glycerine initiated polyether polyol having an average functionality of from 4.5 to 7 hydroxyl groups per molecule and a hydroxyl equivalent weight of 100 to 175, from 2 to 20% by weight of an ethylenediamine-initiated polyol having an equivalent weight of from 100 to 225, and from 0 to 15% by weight of a non-amine-initiated polyol having a functionality of from 2.0 to 3.0 and hydroxyl equivalent weight of from 200 to 500.

A preferred polyol mixture contains
a) from 5% to 40% by weight, based on the weight of the polyol mixture, of a 1,2-phenylene diamine-initiated polyol having an average functionality of greater than 3.0 up to 4.0 and a hydroxyl equivalent weight of from 75 to 560, the 1,2-phenylene diamine-initiated polyol being a reaction product of at least one C₂-C₄ alkylene oxide with 1,2-phenylene diamine,
b) from 30 to 70% by weight, based on the weight of the polyol mixture, of a non-amine-initiated polyether polyol having an average hydroxyl functionality of from 4.5 to 7 and a hydroxyl equivalent weight of from 100 to 175, and
c) at least one of c1), c2) and c3), wherein:
   c1) is at least one renewable-resource polyol having from 2 to 6 hydroxyl groups per molecule and a hydroxyl equivalent weight of from 75 to 1000, and, when present, is present in an amount of from 2 to 15 parts by weight based on the weight of the polyol mixture,
   c2) at least one aromatic amine-initiated polyol (other than the 1,2-phenylene diamine adduct of the invention) having from 2 to 4 hydroxyl groups per molecule and a hydroxyl equivalent weight of from 75 to 560, and, when present, is present in an amount of from 1 to 15% by weight of the polyol mixture; and
   c3) is at least one polyester polyol (other than the renewable-resource polyol) having from 2 to 4 hydroxyl groups per molecule and a hydroxyl equivalent weight of from 75 to 560, and, when present, is present in an amount of from 1 to 10% by weight of the polyol mixture.

In these polyol mixtures, component b is preferably a sucrose/glycerine-initiated polyol. In these polyol mixtures, component c2) is preferably a toluene diamine-initiated polyol, and even more preferably an ortho-toluene diamine-initiated polyol.

Polyol mixtures as described can be prepared by making the constituent polyols individually, and then blending them together. Alternatively, polyol mixtures can be prepared by forming a mixture of the respective initiator compounds, and then alkoxylating the initiator mixture to form the polyol mixture directly. Combinations of these approaches can also be used. In particular, it is contemplated that a mixture of 1,2-phenylene diamine and at least one other initiator as described can be blended and alkoxylated simultaneously, to form a blend of the 1,2-phenylene diamine adduct and a polyol formed from the other initiator or initiators. The other initiator may be, for example, a compound having two or more hydroxyl groups, or two or more primary and/or secondary amine groups. Examples of other initiators that can be used to prepare a co-initiated polyol product include, for example, glycerine, sucrose, sorbitol, water, toluene diamine and ethylene diamine.

The polyurethane-forming composition contains at least one organic polyisocyanate. The organic polyisocyanate or mixture thereof advantageously contains an average of at least 2.5 isocyanate groups per molecule. A preferred isocyanate functionality is from about 2.5 to about 3.6 or from about 2.6 to about 3.3 isocyanate groups/molecule. The polyisocyanate or mixture thereof advantageously has an isocyanate equivalent weight of from about 130 to 200. This is preferably from 130 to 185 and more preferably from 130 to 170. These functionality and equivalent weight values need not apply with respect to any single polyisocyanate in a mixture, provided that the mixture as a whole meets these values.

Suitable polyisocyanates include aromatic, aliphatic and cycloaliphatic polyisocyanates. Aromatic polyisocyanates are generally preferred. Exemplary polyisocyanates include, for example, m-phenylene diisocyanate, 2,4- and/or 2,6-toluene diisocyanate (TDI), the various isomers of diphenylmethanediisocyanate (MDI), hexamethylene-1,6-diisocyanate, tetramethylene-1,4-diisocyanate, cyclohexane-1,4-diisocyanate, hexahydrotoluene diisocyanate, hydrogenated MDI (H₁₂ MDI), naphthylene-1,5-diisocyanate, methoxyphenyl-2,4-diisocyanate, 4,4'-biphenylene diisocyanate, 3,3'-dimethyoxy-4,4'-biphenyl diisocyanate, 3,3'-dimethyldiphenylmethane-4,4'-diisocyanate, 4,4',4"-triphenylmethane diisocyanate, polymethylene polyphenylisocyanates, hydrogenated polymethylene polyphenyl polyisocyanates, toluene-2,4,6-triisocyanate and 4,4'-dimethyldiphenylmethane-2,2',5,5'-tetraisocyanate. Preferred polyisocyanates are the so-called polymeric MDI products, which are a mixture of polymethylene polyphenylene polyisocyanates in monomeric MDI. Especially suitable polymeric MDI products have a free MDI content of from 5 to 50% by weight, more preferably 10 to 40% by weight. Such polymeric MDI products are available from The Dow Chemical Company under the trade names PAPI® and Voranate®.

Polyisocyanates which contain carbodiimide, biuret, urea, allophonate or isocyanurate groups can also be used.

An especially preferred polyisocyanate is a polymeric MDI product having an average isocyanate functionality of from 2.6 to 3.3 isocyanate groups/molecule and an isocyanate equivalent weight of from 130 to 170. Suitable commercially available products of that type include PAPI™ 27, Voranate™ M229, Voranate™ 220, Voranate™ 290, Voranate™ M595 and Voranate™ M600, all from Dow Chemical.

Isocyanate-terminated prepolymers and quasi-prepolymers (mixtures of prepolymers with monomeric polyisocyanate compounds) can also be used. These are prepared by reacting a stoichiometric excess of an organic polyisocyanate with a polyol, such as one or more of the polyols described above. Suitable methods for preparing these prepolymers are well known. Such a prepolymer or quasi-prepolymer preferably has an isocyanate functionality of from 2.5 to 3.6 and an isocyanate equivalent weight of from 130 to 200.

The polyisocyanate is used in an amount sufficient to provide an isocyanate index of from 80 to 1000. Isocyanate index is calculated as the number of reactive isocyanate groups provided by the polyisocyanate component divided by the number of isocyanate-reactive groups in the polyurethane-forming composition (including those contained by isocyanate-reactive blowing agents such as water) and multiplying by 100. Water is considered to have two isocyanate-reactive groups per molecule for purposes of calculating isocyanate index. A preferred isocyanate index is from 90 to 400 and a more preferred isocyanate index is from 100 to 150.

The blowing agent used in the polyurethane-forming composition may include water and/or at least one physical blowing agent. The physical blowing agent is a hydrocarbon, hydrofluorocarbon, hydrochlorofluorocarbon, fluorocarbon, dialkyl ether or fluorine-substituted dialkyl ethers, or a mixture of two or more thereof. Physical blowing agents of these types include propane, isopentane, n-pentane, n-butane, isobutene, isobutene, cyclopentane, dimethyl ether, 1,1-dichloro-1-fluoroethane (HCFC-141b), chlorodifluoromethane (HCFC-22), 1-chloro-1,1-difluoroethane (HCFC-142b), 1,1,1,2-tetrafluoroethane (HFC-134a), 1,1,1,3,3-pentafluorobutane (HFC-365mfc), 1,1-difluoroethane (HFC-152a), 1,1,1,2,3,3,3-heptafluoropropane (HFC-227ea) and 1,1,1,3,3-pentafluoropropane (HFC-245fa). The hydrocarbon and hydrofluorocarbon blowing agents are preferred. It is generally preferred to further include water in the formulation, in addition to the physical blowing agent.

Blowing agent(s) are preferably used in an amount sufficient such that the formulation cures to form a foam having a molded density of from 16 to 160 kg/m³, preferably from 16 to 64 kg/m³ and especially from 20 to 48 kg/m³. To achieve these densities, a hydrocarbon or hydrofluorocarbon blowing agent conveniently is used in an amount ranging from about 10 to about 40, preferably from about 12 to about 35, parts by weight per 100 parts by weight polyol(s). Water reacts with isocyanate groups to produce carbon dioxide, which acts as an expanding gas. Water is suitably used in an amount within the range of 0.5 to 3.5, preferably from 1.5 to 3.0 parts by weight per 100 parts by weight of polyol(s).

The polyurethane-forming composition typically will include at least one catalyst for the reaction of the polyol(s) and/or water with the polyisocyanate. Suitable urethane-forming catalysts include those described by U.S. Pat. No. 4,390,645 and in WO 02/079340. Representative catalysts include tertiary amine and phosphine compounds, chelates of various metals, acidic metal salts of strong acids; strong bases, alcoholates and phenolates of various metals, salts of organic acids with a variety of metals, organometallic derivatives of tetravalent tin, trivalent and pentavalent As, Sb and Bi and metal carbonyls of iron and cobalt.

Tertiary amine catalysts are generally preferred. Among the tertiary amine catalysts are dimethylbenzylamine (such as Desmorapid® DB from Rhine Chemie), 1,8-diaza (5,4,0)undecane-7 (such as Polycat® SA-1 from Air Products), pentamethyldiethylenetriamine (such as Polycat® 5 from Air Products), dimethylcyclohexylamine (such as Polycat® 8 from Air Products), triethylene diamine (such as Dabco® 33LV from Air Products), dimethyl ethyl amine, n-ethyl morpholine, N-alkyl dimethylamine compounds such as N-ethyl N,N-dimethyl amine and N-cetyl N,N-dimethylamine, N-alkyl morpholine compounds such as N-ethyl morpholine and N-coco morpholine, and the like. Other tertiary amine catalysts that are useful include those sold by Air Products under the trade names Dabco® NE1060, Dabco® NE1070, Dabco® NE500, Dabco® TMR-2, Dabco® TMR 30, Polecat® 1058, Polycat® 11, Polycat® 15, Polycat® 33 Polycat® 41 and Dabco® MD45, and those sold by Huntsman under the trade names ZR 50 and ZR 70. In addition, certain amine-initiated polyols can be used herein as catalyst materials, including those described in WO 01/58976 A. Mixtures of two or more of the foregoing can be used.

The catalyst is used in catalytically sufficient amounts. For the preferred tertiary amine catalysts, a suitable amount of the catalysts is from about 1 to about 4 parts, especially from about 1.5 to about 3 parts, of tertiary amine catalyst(s) per 100 parts by weight of the polyol(s).

A trimerization catalyst can be used if desired to promote the formation of isocyanurate groups. The trimerization catalyst is generally used in conjunction with an isocyanate index of 150 or greater, especially 200 or greater. Strong bases such as alkali metal compounds are useful trimerization catalysts.

The polyurethane-forming composition also preferably contains at least one surfactant, which helps to stabilize the cells of the composition as gas evolves to form bubbles and expand the foam. Examples of suitable surfactants include alkali metal and amine salts of fatty acids such as sodium oleate, sodium stearate sodium ricinolates, diethanolamine oleate, diethanolamine stearate, diethanolamine ricinoleate, and the like: alkali metal and amine salts of sulfonic acids such as dodecylbenzenesulfonic acid and dinaphthylmethanedisulfonic acid; ricinoleic acid; siloxane-oxyalkylene polymers or copolymers and other organopolysiloxanes; oxyethylated alkylphenols such as Tergitol NP9 and Triton X100, from The Dow Chemical Company; oxyethylated fatty alcohols such as Tergitol 15-S-9, from The Dow Chemical Company; paraffin oils; castor oil; ricinoleic acid esters; turkey red oil; peanut oil; paraffins; fatty alcohols; dimethyl polysiloxanes and oligomeric acrylates with polyoxyalkylene and fluoroalkane side groups. These surfactants are generally used in amount of 0.01 to 6 parts by weight based on 100 parts by weight of the polyol.

Organosilicone surfactants are generally preferred types. A wide variety of these organosilicone surfactants are commercially available, including those sold by Goldschmidt under the Tegostab® name (such as Tegostab B-8462, B8427, B8433 and B-8404 surfactants), those sold by OSi Specialties under the Niax® name (such as Niax® L6900 and L6988 surfactants) as well as various surfactant products commercially available from Air Products and Chemicals, such as DC-193, DC-198, DC-5000, DC-5043 and DC-5098 surfactants.

In addition to the foregoing ingredients, the polyurethane-forming composition may include various auxiliary components, such as fillers, colorants, odor masks, flame retardants, biocides, antioxidants, UV stabilizers, antistatic agents, viscosity modifiers.

Examples of suitable flame retardants include phosphorus compounds, halogen-containing compounds and melamine.

Examples of fillers and pigments include calcium carbonate, titanium dioxide, iron oxide, chromium oxide, azo/diazo dyes, phthalocyanines, dioxazines, recycled rigid polyurethane foam and carbon black.

Examples of UV stabilizers include hydroxybenzotriazoles, zinc dibutyl thiocarbamate, 2,6-ditertiarybutyl catechol, hydroxybenzophenones, hindered amines and phosphites.

Except for fillers, the foregoing additives are generally used in small amounts, such as from 0.01 percent to 3 percent each by weight of the polyurethane formulation. Fillers may be used in quantities as high as 50% by weight of the polyurethane formulation.

The polyurethane-forming composition is prepared by bringing the various components together under conditions such that the polyol(s) and isocyanate(s) react, the blowing agent generates a gas, and the composition expands and cures. All components (or any sub-combination thereof) except the polyisocyanate can be preblended into a formulated polyol composition, if desired, which is then mixed with the polyisocyanate when the foam is to be prepared. The components may be preheated if desired, but this is usually not necessary, and the components can be brought together at about room temperature (~22°C) to conduct the reaction. It is usually not necessary to apply heat to the composition to drive the cure, but this may be done if desired, too.

The invention is particularly useful in so-called "pour-in-place" applications, in which the polyurethane-forming composition is dispensed into a cavity and foams within the cavity to fill it and provide structural and/or thermal insulative attributes to an assembly. The nomenclature "pour-in-place" refers to the fact that the foam is created at the location where it is needed, rather than being created in one step and later assembled into place in a separate manufacturing step. Pour-in-place processes are commonly used to make appliance products such as refrigerators, freezers, and coolers and similar products which have walls that contain thermal insulation foam. The presence of the 1,2-phenylene diamine adduct in the polyurethane-forming composition tends to provide the formulation with good flow and short demold times, while at the same time producing a low k-factor foam.

The walls of appliances such as refrigerators, freezers and coolers are most conveniently insulated in accordance with the invention by first assembling an outer shell and in interior liner together, such that a cavity is formed between the shell and liner. The cavity defines the space to be insulated as well as the dimensions and shape of the foam that is produced. Typically, the shell and liner are bonded together in some way, such as by welding, melt-bonding or through use of some adhesive (or some combination of these) prior to introduction of the foam formulation. In most cases, the shell and liner may be supported or held in the correct relative positions using a jig or other apparatus. One or more inlets to the cavity are provided, through which the foam formulation can be introduced. Usually, one or more outlets are provided to allow air in the cavity to escape as the cavity is filled with the foam formulation and the foam formulation expands.

The materials of construction of the shell and liner are not particularly critical, provided that they can withstand the conditions of the curing and expansion reactions of the foam formulation. In most cases, therefore, the materials of construction will be selected with regard to specific performance attributes that are desired in the final product. Metals such as steel are commonly used as the shell, particularly in larger appliances such as freezers or refrigerators. Plastics such as polycarbonates, polypropylene, polyethylene styrene-acrylonitrile resins, acrylonitrile-butadiene-styrene resins or high-impact polystyrene are used more often in smaller appliances (such as coolers) or those in which low weight is important. The liner may be a metal, but is more typically a plastic as just described.

The foam formulation is then introduced into the cavity. The various components of the foam formulation are mixed together and the mixture introduced quickly into the cavity, where the components react and expand. It is common to pre-mix the polyol(s) together with the water and any physical blowing agent that may be used (and often catalyst and/or surfactant as well) to produce a formulated polyol. The formulated polyol can be stored until it is time to prepare the foam, at which time it is mixed with the polyisocyanate and introduced into the cavity. It is usually not required to heat the components prior to introducing them into the cavity, nor it is usually required to heat the formulation within the cavity to drive the cure, although either or both of these steps may be taken if desired. The shell and liner may act as a heat sink in some cases, and remove heat from the reacting foam formulation. If necessary, the shell and/or liner can be heated somewhat (such as up to 50°C and more typically 35-40°C) to reduce this heat sink effect, or to drive the cure.

Enough of the foam formulation is introduced such that, after it has expanded, the resulting foam fills those portions of the cavity where foam is desired. Most typically, essentially the entire cavity is filled with foam. It is generally preferred to "overpack" the cavity slightly, by introducing more of the foam formulation than is minimally needed to fill the cavity, thereby increasing the foam density slightly. The overpacking provides benefits such as better dimensional stability of the foam, especially in the period following demold. Generally, the cavity is overpacked by from 4 to 20% by weight. The final foam density for most appliance applications is preferably in the range of from 28 to 40 kg/m³.

If desired, the process can be practiced in conjunction with various vacuum assisted mold-filling methods such as vacuum assisted injection (VAI), in which the reaction mixture is injected into a closed mold cavity which is at a reduced pressure. Such methods are described, for example, in WO 07/058793.

After the foam formulation has expanded and cured enough to be dimensionally stable, the resulting assembly can be "demolded" by removing it from the jig or other support that is used to maintain the shell and liner in their correct relative positions. Short demold times are important to the appliance industry, as shorter demold times allow more parts to be made per unit time.

Demold times can be evaluated as follows: A 28-liter "jumbo" Brett mold coated with release agent is conditioned to a temperature of 45°C. 896 g ± 4 g of a foam formulation is injected into the mold in order to obtain a 32 kg/m³ density foam. After a period of 6 minutes, the foam is removed from the mold and the thickness of the foam is measured. After a further 24 hours, the foam thickness is re-measured. The difference between the thickness after 24 hours and the initial thickness is an indication of the post-demold expansion of the foam. The demold time is considered to be sufficiently long if the post-demold expansion is no more than 4 mm on this test.

As mentioned, flow is another important attribute of the foam formulation. For purposes of this invention, flow is evaluated using a rectangular "Brett" mold, having dimensions of 200 cm X 20 cm X 5 cm (~6'6" X 8" X 2"). The polyurethane-forming composition is formed, and immediately injected into the Brett mold, which is oriented vertically (i.e., 200 cm direction oriented vertically) and preheated to 45 ± 5°C. The composition is permitted to expand against its own weight and cure inside the mold. The amount of polyurethane-forming composition is selected such that the resulting foam just fills the mold. The density of the resulting foam is then measured and compared with the density of a free-rise foam made from the same formulation (by injecting the formulation into a plastic bag or open cardboard box where it can expand freely vertically and horizontally against atmospheric pressure). The ratio of the Brett mold foam density to the free rise density is considered to represent the "flow index" of the formulation. With this invention, flow index values are typically below 1.8, and are preferably from 1.2 to 1.5.

The polyurethane foam advantageously exhibits a low k-factor. The k-factor of a foam may depend on several variables, of which density is an important one. For many applications, a rigid polyurethane foam having a density of from 28.8 to 40 kg/m³ (1.8 to 2.5 pounds/cubic foot) exhibits a good combination of physical properties, dimensional stability, and cost. Foam in accordance with the invention, having a density within that range, preferably exhibits a 10°C k-factor of no greater than 22, preferably no greater than 20, and more preferably no greater than 19.5 mW/m-°K. Higher density foam may exhibit a somewhat higher k-factor.

In addition to the appliance and thermal insulation foams described above, the invention is also useful to produce vehicle noise dampening foams, one or more layers of a laminated board, pipe insulation, and other foam products. The invention is of special interest when a rapid cure is wanted, and or good thermal insulating properties are wanted in the foam.

The following examples are provided to illustrate the invention, but are not intended to limit the scope thereof. All parts and percentages are by weight unless otherwise indicated.

### Example 1

1,2-phenylene diamine (3990 g, 37 moles) is added to a glass reactor purged with nitrogen, and heated to 125°C. The flask is pressurized to ~4500 kPa with propylene oxide, and the pressure maintained until a total of 6428 g (111 mole) of propylene oxide is fed to the flask. The reaction is then allowed to digest for two hours at 125°C, after which 86 g of a 45% potassium hydroxide solution in water is added. The water is removed under vacuum at 115°C, and the reactor is again heated to 125°C. More propylene oxide is fed into the reactor until an additional 5392 g (93 mol) of propylene oxide is added. The reaction is then allowed to digest again for 2 hours, at which time a 70% solution of acetic acid in water is added. The resulting polyol has an equivalent weight of 127.5 and a viscosity of only 4,320 centipoises at 50°C. The polyol contains about 3.4 hydroxyl groups per molecule, about 0.6 secondary amino groups per molecule and less than 0.05 primary amino groups per molecule. The adduct corresponds to one mole of 1,2-phenylene diamine and about 5.6 moles of propylene oxide.

### Example 2

1,2-phenylene diamine (3983 g, 37 moles) is added to a glass reactor purged with nitrogen, and heated to 107°C. The flask is pressurized to ~4500 kPa with propylene oxide, and the pressure maintained until a total of 6428 g (111 mole) of propylene oxide is fed to the flask. The reaction is then allowed to digest for two hours at 107°C, after which 86 g of a 45% potassium hydroxide solution in water is added. The water is removed under vacuum at 115°C, and the reactor is then heated to 115°C. More propylene oxide is fed into the reactor until an additional 5315 g (92 mol) of propylene oxide is added. The reaction is then allowed to digest again for 2 hours, at which time a 70% solution of acetic acid in water is added. The resulting polyol has an equivalent weight of 127.2 and a viscosity of only 4,920 centipoises at 50°C. The polyol contains about 3.4 hydroxyl groups per molecule, about 0.6 secondary amino groups per molecule and less than 0.05 primary amino groups per molecule. The adduct corresponds to one mole of 1,2-phenylene diamine and about 5.6 moles of propylene oxide.

### Examples 3, 4 and Comparative Sample A

Rigid polyurethane foam Examples 3, 4 and Comparative Sample A are produced from the components described in Table 1. Foam processing is performed using a Hi Tech CS-50 high pressure machine operated at a throughput of 175-225 g/s. The foam formulation is injected into a bag (to measure free rise density) and into a vertical Brett mold which is preheated to 45°C. Component temperatures prior to mixing are ~21°C.

The 1,3-phenylene diamine polyol used in Comparative Sample A has a viscosity in excess of 150,000 cps at 50°C, which makes it very difficult to handle and process.

**Table 1**

| | Parts By Weight | | |
|---|---|---|---|
| Component | Example 3 | Example 4 | Comp. Sample A |
| Sorbitol-initiated polyol¹ | 57.0 | 57.0 | 57.0 |
| Polyol of Example 1 | 15.6 | 0 | 0 |
| Polyol of Example 2 | 0 | 15.6 | 0 |
| 1,3-phenylene diamine polyol² | 0 | 0 | 15.6 |
| Ethylene diamine-initiated polyol³ | 11.0 | 11.0 | 11.0 |
| Poly(propylene oxide) diol⁴ | 10.0 | 10.0 | 10.0 |
| Water | 2.4 | 2.4 | 2.4 |
| Silicone surfactant | 2.0 | 2.0 | 2.0 |
| Amine Catalysts | 2.0 | 2.0 | 2.0 |
| Cyclopentane | 14.0 | 14.0 | 14.0 |
| Polymeric MDI (index) | 155 (115 index) | 155 (115 index) | 155 (115 index) |

| | | | |
|---|---|---|---|
| ¹A 6.0 functional poly(propylene oxide) having a hydroxyl number of 482. ²A 1,3-phenylene diamine-initiated poly(propylene oxide) having an equivalent weight of about 109. ³A poly(propylene oxide) having a hydroxyl number of 500. ⁴A diol having a molecular weight of about 400. | | | |

Cream time, gel time, tack-free time, free rise density, minimum fill density and average compressive strength are all measured for each of the foams. 10°C k-factor is measured on 8" X 1" X 1" (20 X 2.5 X 2.5 cm) samples using a Laser Comp Fox 200 device, with an upper cold plate temperature of -3°C and a lower warm plate temperature of 23°C, and found to be 19.15 mW/m-°K. Post-demold expansion is determined after 6 and 7 minutes curing time in a jumbo Brett mold. Results are as in Table 2 below.

**Table 2**

| Property | Example 3 | Example 4 | Comp. Sample A |
|---|---|---|---|
| Cream time, s | 4 | 3 | 3 |
| Gel time, s | 35 | 36 | 38 |
| Tack-free time, s | 51 | 51 | 53 |
| Free rise density, kg/m³ | 22.25 | 22.44 | 22.26 |
| Minimum fill density, kg/m³ | 32.26 | 32.27 | 31.30 |
| Flow index | 1.45 | 1.44 | 1.41 |
| Average Compressive Strength, kPa | 142.91 | 140.42 | 146.56 |
| 10°C k-factor, mW/m-°K | 18.95 | 19.08 | 19.23 |
| Expansion, 6 minute demold time, mm | 3.10 | 2.70 | 3.40 |
| Expansion, 7 minute demold time, mm | 2.20 | 2.20 | 2.60 |

Examples 3 and 4 have lower k-factors and shorter demold times (as indicated by lower demold expansions at 6 and 7 minutes) than does Comparative Sample A. Flow index and foam densities are very consistent.

## Claims

1. A process for preparing a rigid isocyanate-based foam, comprising
a) forming a reactive mixture containing at least
1) an adduct of 1,2-phenylene diamine and propylene oxide, ethylene oxide or a mixture of propylene oxide and ethylene oxide, the adduct having an average of from 2.8 to 4.0 hydroxyl groups per molecule, from 0 to 1.0 secondary amino groups per molecule, from 0 to 0.2 primary amino groups per molecule and an equivalent weight per active hydrogen atom of from about 60 to 250, or mixture of the 1,2-phenylene diamine adduct with at least one other polyol, provided that such a mixture contains at least 5% by weight of the 1,2-phenylene diamine adduct;
2) at least one blowing agent;
3) at least one polyisocyanate; and
b) subjecting the reactive mixture to conditions such that the reactive mixture expands and cures to form a rigid foam.

2. The process of claim 1, wherein the blowing agent includes water.

3. The process of claim 1 or 2 wherein the blowing agent includes a physical blowing agent.

4. The process of claim 3, wherein the physical blowing agent includes at least one hydrocarbon, hydrofluorocarbon, hydrochlorofluorocarbon, fluorocarbon, dialkyl ether or fluorine-substituted dialkyl ether.

5. The process of any of claims 1-4, wherein the reaction mixture contains a mixture of the 1,2-phenylene diamine adduct and at least one other polyether polyol having a hydroxyl functionality of from 4.5 to 7 and a hydroxyl equivalent weight of 100 to 175.

6. The process of claim 5, wherein the reaction mixture further contains at least one additional amine-initiated polyol having an average hydroxyl functionality of from 2.0 to 4.0 and a hydroxyl equivalent weight of from 100 to 225.

7. The process of claim 6, wherein the reaction mixture further contains a non-amine-initiated polyol having a hydroxyl functionality of from 2.0 to 3.0 and a hydroxyl equivalent weight of from 90 to 500.

8. The process of any of claims 1-4, wherein the reaction mixture contains a mixture of the 1,2-phenylene diamine adduct and at least one polyester polyol.

9. The process of any of claims 1-8, wherein the isocyanate index is from 90 to 400.

10. The process of any of claims 1-9, wherein the reaction mixture is dispensed into a cavity and foams within the cavity to fill the cavity and provide structural or thermal insulative attributes to an assembly.

11. The process of claim 10, wherein the assembly is an appliance and the rigid foam is a thermal insulating foam.

12. The process of claim 10 or 11, wherein the reaction mixture is dispensed into a cavity which is under a reduced pressure.

13. A rigid isocyanate-based foam prepared in accordance with any of claims 1-12.

14. The foam of claim 13, which is formed for use as an appliance insulation foam, a layer of a laminated board, pipe insulation or a vehicle dampening member.

## Patentansprüche

1. Verfahren zur Herstellung eines Hartschaums auf Isocyanatbasis, mit den folgenden Schritten:
a) es wird eine reaktive Mischung gebildet, die mindestens Folgendes enthält:
1) ein Addukt von 1,2-Phenylendiamin und Propylenoxid, Ethylenoxid oder eine Mischung von Propylenoxid und Ethylenoxid, wobei das Addukt im Durchschnitt von 2,8 bis 4,0 Hydroxylgruppen pro Molekül, von 0 bis 1,0 sekundäre Aminogruppen pro Molekül, von 0 bis 0,2 primäre Aminogruppen pro Molekül und ein Äquivalentgewicht pro aktivem Wasserstoffatom von etwa 60 bis 250 besitzt, oder eine Mischung des 1,2-Phenylendiaminaddukts mit mindestens einem weiteren Polyol, mit der Maßgabe, dass eine solche Mischung mindestens 5 Gew.-% des 1,2-Phenylendiaminaddukts enthält;
2) mindestens ein Treibmittel;
3) mindestens ein Polyisocyanat; und
b) die reaktive Mischung wird solchen Bedingungen unterworfen, dass sich die reaktive Mischung ausdehnt und zu einem Hartschaum aushärtet.

2. Verfahren nach Anspruch 1, wobei das Treibmittel Wasser umfasst.

3. Verfahren nach Anspruch 1 oder 2, wobei das Treibmittel ein physikalisches Treibmittel umfasst.

4. Verfahren nach Anspruch 3, wobei das physikalische Treibmittel mindestens einen Kohlenwasserstoff, Fluorkohlenwasserstoff, Fluorchlorkohlenwasserstoff, Fluorkohlenstoff, Dialkylether oder fluorsubstituierten Dialkylether umfasst.

5. Verfahren nach einem der Ansprüche 1-4, wobei das Reaktionsgemisch eine Mischung des 1,2-Phenylendiaminaddukts und mindestens eines weiteren Polyetherpolyols mit einer Hydroxylfunktionalität von 4,5 bis 7 und einem Hydroxyläquivalentgewicht von 100 bis 175 enthält.

6. Verfahren nach Anspruch 5, wobei das Reaktionsgemisch ferner mindestens ein zusätzliches amininitiiertes Polyol mit einer durchschnittlichen Hydroxylfunktionalität von 2,0 bis 4,0 und einem Hydroxyläquivalentgewicht von 100 bis 225 enthält.

7. Verfahren nach Anspruch 6, wobei das Reaktionsgemisch ferner ein nichtamininitiiertes Polyol mit einer Hydroxylfunktionalität von 2,0 bis 3,0 und einem Hydroxyläquivalentgewicht von 90 bis 500 enthält.

8. Verfahren nach einem der Ansprüche 1-4, wobei das Reaktionsgemisch eine Mischung des 1,2-Phenylendiaminaddukts und mindestens eines Polyesterpolyols enthält.

9. Verfahren nach einem der Ansprüche 1-8, wobei der Isocyanatindex von 90 bis 400 beträgt.

10. Verfahren nach einem der Ansprüche 1-9, wobei das Reaktionsgemisch in einen Hohlraum abgegeben wird und in dem Hohlraum aufschäumt, um den Hohlraum zu füllen und einer Baugruppe strukturelle oder wärmeisolierende Eigenschaften zu verleihen.

11. Verfahren nach Anspruch 10, wobei die Baugruppe ein Gerät ist und der Hartschaum ein wärmeisolierender Schaumstoff ist.

12. Verfahren nach Anspruch 10 oder 11, wobei das Reaktionsgemisch in einen Hohlraum abgegeben wird, der unter einem verminderten Druck steht.

13. Hartschaum auf Isocyanatbasis, der nach einem der Ansprüche 1-12 hergestellt ist.

14. Hartschaum nach Anspruch 13, der zur Verwendung als Geräteisolierungsschaum, Schicht einer Schichtstoffplatte, Rohrisolierung oder als Fahrzeugdämpfungselement gebildet ist.

## Revendications

1. Procédé de préparation d'une mousse rigide à base d'isocyanate, comportant les étapes suivantes :
a) préparer un mélange réactionnel contenant au moins
1) un produit d'addition de 1,2-phénylène-diamine et d'oxyde de propylène, d'oxyde d'éthylène ou d'un mélange d'oxyde de propylène et d'oxyde d'éthylène, lequel produit d'addition comporte en moyenne de 2,8 à 4,0 groupes hydroxyle par molécule, de 0 à 1,0 groupe amino secondaire par molécule et de 0 à 0,2 groupe amino primaire par molécule, et présente un poids d'équivalent par atome d'hydrogène actif d'à peu près 60 à 250, ou un mélange d'un tel produit d'addition de 1,2-phénylène-diamine et d'au moins un autre polyol, sous réserve que ce mélange contienne au moins 5 % en poids de produit d'addition de 1,2-phénylène-diamine,
2) au moins un agent d'expansion,
3) et au moins un polyisocyanate ;
b) et mettre le mélange réactionnel dans des conditions telles que le mélange réactionnel s'expanse et durcit de manière à former une mousse rigide.

2. Procédé conforme à la revendication 1, dans lequel l'agent d'expansion comprend de l'eau.

3. Procédé conforme à la revendication 1 ou 2, dans lequel l'agent d'expansion comprend un agent d'expansion physique.

4. Procédé conforme à la revendication 3, dans lequel l'agent d'expansion physique comprend au moins un hydrocarbure, un hydrofluorocarbure, un hydrochlorofluorocarbure, un fluorocarbure, un éther dialkylique ou un éther dialkylique fluoré.

5. Procédé conforme à l'une des revendications 1 à 4, dans lequel le mélange réactionnel contient un mélange du produit d'addition de 1,2-phénylènediamine et d'au moins un autre polyéther-polyol comportant des groupes fonctionnels hydroxyle en un nombre de 4,5 à 7 et présentant un poids d'équivalent hydroxyle de 100 à 175.

6. Procédé conforme à la revendication 5, dans lequel le mélange réactionnel contient en outre au moins un polyol à amorceur amine supplémentaire qui comporte des groupes fonctionnels hydroxyle en un nombre moyen de 2,0 à 4,0 et qui présente un poids d'équivalent hydroxyle de 100 à 225.

7. Procédé conforme à la revendication 6, dans lequel le mélange réactionnel contient en outre un polyol à amorceur non-amine qui comporte des groupes fonctionnels hydroxyle en un nombre de 2,0 à 3,0 et qui présente un poids d'équivalent hydroxyle de 90 à 500.

8. Procédé conforme à l'une des revendications 1 à 4, dans lequel le mélange réactionnel contient un mélange du produit d'addition de 1,2-phénylènediamine et d'au moins un polyester-polyol.

9. Procédé conforme à l'une des revendications 1 à 8, dans lequel l'indice d'isocyanate vaut de 90 à 400.

10. Procédé conforme à l'une des revendications 1 à 9, dans lequel le mélange réactionnel est envoyé dans une cavité et s'expanse en mousse à l'intérieur de cette cavité, de manière à remplir celle-ci et à conférer à un assemblage des caractéristiques structurales ou des capacités d'isolation thermique.

11. Procédé conforme à la revendication 10, dans lequel l'assemblage est un appareil et la mousse rigide est une mousse thermo-isolante.

12. Procédé conforme à la revendication 10 ou 11, dans lequel le mélange réactionnel est envoyé dans une cavité où règne une pression réduite.

13. Mousse rigide à base d'isocyanate, préparée selon un procédé conforme à l'une des revendications 1 à 12.

14. Mousse conforme à la revendication 13, qui est formée pour être utilisée comme mousse isolante dans un appareil, comme couche de panneau stratifié, comme matériau isolant dans une canalisation, ou comme élément amortisseur dans un véhicule.
